# EUROPÄISCHE PATENTSCHRIFT

(11) **EP 3 345 717 B1**
(45) Veröffentlichungstag und Bekanntmachung des Hinweises auf die Patenterteilung: **13.08.2025**
(21) Anmeldenummer: 16200637.3
(22) Anmeldetag: 25.11.2016
(51) Int. Cl.: B23K 37/02, B23K 37/04, B23K 101/36, B23K 26/035

(54) **ANDRÜCKSYSTEM, LASERFÜGESYSTEM UND VERFAHREN**
PRESSURE SYSTEM, LASER JOINING SYSTEM AND METHOD
SYSTÈME DE PRESSAGE, SYSTÈME ET PROCÉDÉ D'ASSEMBLAGE

(43) Veröffentlichungstag der Anmeldung: 11.07.2018
(73) Patentinhaber: Manz AG, 72768 Reutlingen (DE)
(72) Erfinder: FREUNDT, Martin, 73732 Esslingen (DE); NEHER, Ralf, 72336 Balingen (DE); SCHMIEDER, Benjamin, 70174 Stuttgart (DE)
(74) Vertreter: Kohler Schmid Möbus Patentanwälte

(56) Entgegenhaltungen:
- WO-A1-2014/202440
- WO-A2-2011/133278
- DE-U1- 202009 008 851
- US-A- 5 194 710
- US-A1- 2005 230 363
- US-A1- 2007 221 637
- AMADA WELD TECH GMBH: "Laser Welding battery tabs made easy - by AMADA WELD TECH GmbH", 5 October 2016 (2016-10-05), pages 1 - 3, XP054982330, Retrieved from the Internet <URL:https://www.youtube.com/watch?v=he8qcucZomk> [retrieved on 20211008]

## Beschreibung

Die Erfindung betrifft ein Andrücksystem für ein Laserfügesystem zum Aneinanderdrücken einer Grundplatte und einer Speicherzelle im Bereich einer Fügestelle zur Herstellung eines Stromspeichers, ein entsprechendes Laserfügesystem und das Herstellungsverfahren.

Für das Verbinden von Fügeteilen mittels Laserfügens werden üblicherweise Vorrichtungen für das Anpressen der Fügeteile verwendet. Dies betrifft insbesondere auch die Herstellung von Stromspeichern.

Moderne Stromspeicher bestehen aus einer Vielzahl von Speicherzellen, die an einer gemeinsamen Grundplatte angeordnet und an Fügestellen, insbesondere mittels Laserfügens, mit dieser zusammengefügt sind. Eine Grundplatte in diesem Sinne stellen beispielsweise Leiterplatten oder Anschlussplatten zur Bildung eines der Pole (Plus- bzw. Minuspol) oder einer Messstelle der Stromspeicher dar, sodass ein Stromspeicher auch mehrere solcher Grundplatten aufweisen kann.

Zum Laserfügen müssen die Speicherzelle und die Grundplatte zunächst an einer Fügestelle der Grundplatte angeordnet werden. Anschließend werden die beiden Fügeteile aneinandergedrückt und miteinander an der Fügestelle lasergefügt, beispielsweise lasergeschweißt.

Das zum Andrücken vorgesehene Andrücksystem ist üblicherweise als Platte bzw. Maske mit Federelementen für jede der Fügestellen ausgebildet. Dazu ist die Maske in der Regel individuell auf die jeweiligen miteinander zu verfügenden Teile abgestimmt bzw. individuell hergestellt.

Die Maske wird auf die Grundplatte gepresst, wodurch gleichzeitig an allen oder zumindest an einer Vielzahl von Fügestellen die jeweiligen Speicherzellen an die Grundplatte angedrückt werden.

Sobald alle Fügeteile an den jeweiligen Gegenpart bzw. an die Grundplatte angedrückt sind, werden die Fügeteile nacheinander an den jeweiligen Fügestellen miteinander gefügt.

Nachteilig dabei ist zum einen, dass ein derartiges Andrücksystem jeweils eine individuell auf die jeweilige Fügeaufgabe abgestimmte Maske benötigt. Des Weiteren ist problematisch, dass bei einer Vielzahl, beispielsweise mehreren hundert oder tausend Fügestellen, wie beispielsweise im Fall von Hochleistungsstromspeichern, die notwendige Anpresskraft, mit der die Maske gegen die Fügeteile gedrückt werden muss, linear mit der Anzahl der Fügestellen steigt. Weiterhin können die Anpressungen an den Fügestellen nur gesamthaft qualitätsgesichert werden. Fehlerhafte Anpressungen, beispielsweise Spaltabstände aufgrund von Höhenunterschieden im Rahmen der Fertigungstoleranzen von Speicherzellen können nur sehr eingeschränkt überwacht bzw. behoben werden.

Aus der DE 20 2009 008 851 U1 ist ein Spannsystem zum Zusammenpressen von zu verschweißenden Blechen bekannt. Dabei werden zwei aneinander zu fügende Bleche durch zwei gegenläufig angeordnete, ein- und ausfahrbare Anpresselemente aneinander gepresst.

Aus der US 2007/0221637 A1 ist es bekannt, zwei zu fügende Metallplatten mittels eines Anpressrades zu fixieren. Das Anpressrad kann dabei von den Metallplatten abgehoben oder auf die Metallplatten abgesenkt werden.

Eine Vorrichtung zur Fixierung von Anschlüssen eines integrierten Halbleiters eines Laserstrahls während des Bondens ist aus der US 5,194,710 bekannt. Die Vorrichtung weist eine vertikal ausgerichtete Ausnehmung auf, entlang derer ein Schweißlaserstrahl den gewünschten Schweißpunkt erreicht. Die Vorrichtung maskiert insbesondere ferner den übrigen Halbleiter gegenüber reflektiertem Licht des Schweißlaserstrahls.

Ferner ist ein rotierbares Andrückelement zum Aneinanderpressen zweier zu fügender Metallplatten während des Laserschweißens aus der WO 2011/133278 A2 bekannt.

Ein Andrückelement zum Aneinanderpressen von Karosserieteilen, insbesondere mit einem Höhenversatz, während des Laserschweißens ist aus der US 2005/0230363 A1 bekannt. Das Andrückelement kann mittels Aktoren senkrecht zu den Karosserieteilen bewegt werden. Zwischen dem Andrückelement und gegenüberliegend angeordneten Gegenhaltern können die Karosserieteile eingeklemmt werden.

Aufgabe der vorliegenden Erfindung ist es, das Fügen einer Grundplatte und einer Speicherzelle mittels eines Andrücksystems, eines Laserfügesystems und eines Verfahrens zur Herstellung eines Stromspeichers zu verbessern Gelöst wird die Aufgabe durch ein Andrücksystem für ein Laserfügesystem zum Aneinanderdrücken einer Grundplatte und einer Speicherzelle gemäß Patentanspruch 1.

Dies ermöglicht es, die Grundplatte und die Speicherzelle lediglich lokal im Bereich der Fügestelle aneinanderzudrücken. Dabei macht sich die Erfindung die Erkenntnis zu Nutze, dass der Fügeprozess in der Regel geschwindigkeitsbestimmend für den Gesamtprozess ist und daher zunächst lediglich an der jeweiligen Fügestelle die Grundplatte und die Speicherzelle aneinanderzudrücken sind. Somit besteht während des Fügens an einer Fügestelle eine bislang ungenutzte Wartezeit, während der eine Bearbeitung an einer anderen Fügestelle vorbereitet werden kann. Auch kann ein Andrückelement verwendet werden, das sehr viel kleiner und mit geringerer Masse ausgebildet ist, da nicht wie im Stand der Technik ein großflächiges Andrücken mittels einer Platte oder Maske erfolgt, sondern nur ein punktuelles Andrücken.

Unabhängig von der Anzahl der Fügestellen bzw. der aneinanderzufügenden Grundplatten und/oder Speicherzellen bedarf es somit lediglich einer geringen Gesamt-Andrückkraft. Dadurch kann eine einfachere Mechanik verwendet werden, wodurch sich Kosten- und Leistungsvorteile bei dem erfindungsgemäßen Laserfügesystem realisieren lassen.

Die Aufnahme kann relativ zu einem Maschinengehäuse bzw. relativ zum Standort des Laserfügesystems ortsfest oder bewegbar sein. Die Aufnahme kann insbesondere als Auflage, als Tisch oder als Förderbandabschnitt ausgebildet sein. Auch kann die Aufnahme als Halterung zur Aufnahme einer Fügeteilart ausgebildet sein. Beispielsweise kann die Aufnahme ein Träger sein, auf dem Speicherzellen matrixförmig angeordnet sind. Auf den Speicherzellen kann eine Grundplatte aufgelegt sein, sodass die Speicherzellen mit der Grundplatte an matrixförmig verteilten Fügestellen miteinander verfügt werden können. Es versteht sich dabei, dass die Anordnung der Grundplatten und/oder Speicherzellen in der Aufnahme auch nach anderen Kriterien erfolgen kann, beispielsweise derart, dass eine maximale Anzahl an Speicherzellen, insbesondere nebeneinander, angeordnet werden können.

Die Ebene kann beispielsweise parallel zu einer Seite einer Grundplatte und/oder Speicherzelle verlaufen, insbesondere parallel zu einer Grundplatte.

Insbesondere kann zum Fügen an einer Fügestelle das Andrückelement relativ zur Aufnahme mittels der Parallel-Positioniereinrichtung parallel zu einer durch die Grundplatte gebildeten Ebene zur Fügestelle hin verfahren werden. Mittels der Schräg-Positioniereinrichtung kann dann das Andrückelement relativ zur Aufnahme, beispielsweise quer, insbesondere senkrecht, zur Ebene verfahren werden. Damit kann das Andrückelement gegen die Grundplatte an der Fügestelle drücken und somit eine unter der Grundplatte liegende Speicherzelle gegen die Grundplatte andrücken, bis beide Fügeteile spaltfrei kontaktieren. Anschließend können beide Fügeteile mittels eines Fügelasers miteinander verfügt werden. Die Schräg-Positioniereinrichtung ist dabei dazu eingerichtet, die Fügeteile während des Fügeprozesses aneinander zu drücken.

Erfindungsgemäß können die zwei Andrückelemente voneinander unabhängig verlagert werden.

Dabei kann ein erstes Andrückelement an einer ersten Fügestelle zwei Fügeteile aneinanderdrücken, während ein zweites Andrückelement zu einer zweiten Fügestelle verlagert wird. Somit kann während des Fügeprozesses an der ersten Fügestelle bereits eine nächste Fügestelle angefahren werden. Dabei kommt insbesondere vorteilhafterweise zum Tragen, dass der Fokus des Fügelasers, beispielsweise mittels einer Scannereinheit, in der Regel wesentlich schneller verlagert werden kann als ein (mechanisches) Andrückelement. Der Fügeprozess selbst benötigt jedoch eine vergleichsweise lange Zeitdauer. Somit kann ein Andrückelement mit vergleichsweise geringer Geschwindigkeit mittels der Parallel-Positioniereinrichtung relativ zur Aufnahme parallel zur Ebene verlagert werden. Leerlaufzeiten bzw. Unterbrechungen des Fügeprozesses durch Wechsel der Fügestellen können vermieden bzw. auf ein Minimum reduziert werden.

Die Verwendung des Andrücksystems kann gemäß Patentanspruch 2 erfolgen. Insbesondere kann die Scherenmechanik mittels eines Scherengestänges und eines Linearantriebs ausgebildet sein. Durch die Scherenmechanik kann der benötigte Bauraum reduziert und eine gute Zugänglichkeit, insbesondere eine vergleichsweise freie Anordenbarkeit eines Fügelasers des Laserfügesystems, erzielt werden. Auch kann die Scherenmechanik von einer Seite des Laserfügesystems aus gesteuert werden.

Die Schräg-Positioniereinrichtung kann einen Linearantrieb und/oder einen Pneumatikantrieb aufweisen. Sie kann auch einen elektrischen und/oder magnetischen Antrieb umfassen. Dabei kann insbesondere mittels eines Pneumatikantriebs, beispielsweise eines Pneumatikzylinders, die Relativpositionierung des Andrückelements und der Aufnahme besonders massearm und damit trägheitsarm erfolgen.

Denkbar ist auch eine Verwendung des Andrücksystems gemäß Patentanspruch 3. Beispielsweise kann mittels des Andrückelements die Andrückkraft bestimmt werden.

Weisen Speicherzellen beispielsweise aufgrund von Fertigungstoleranzen unterschiedliche Abmessungen auf, so kann das Andrückelement so weit gegen die Aufnahme relativ verlagert werden, bis eine Mindestandrückkraft von einem Kraftsensor registriert wird. Somit kann auf besonders einfache Weise sichergestellt werden, dass beide Fügeteile weitgehend oder vollständig spaltfrei aneinandergedrückt werden.

Der Sensor kann als separater Sensor ausgebildet sein. Denkbar ist es auch, den Sensor durch eine, insbesondere integrierte, Sensorik zu bilden. Beispielsweise kann der Sensor durch eine Vorrichtung gebildet sein, die eingerichtet ist, beispielsweise eine Positionsinformation, einen Motorstrom, eine Regelabweichung von einem bereits erfassten Messwert oder dergleichen vorzugsweise eines Positioniersystems, insbesondere einer Parallel- und/oder Schräg-Positioniereinrichtung auszuwerten.

Besonders vorteilhaft ist es, einen Kraft-Weg-Verlauf auszuwerten. Damit kann beispielsweise anhand des Auftretens eines Sprungs der gemessenen Kraft ermittelt werden, ob eines der Fügeteile bzw. eine der Oberflächen verformt ist und/oder das Fügeteil das andere Fügeteil kontaktiert.

Denkbar ist auch eine Verwendung des Andrücksystems gemäß Patentanspruch 4 . Dann kann ein Bereich um die Fügestelle auf der Grundplatte während des Fügens gekühlt werden.

Ein besonders vorteilhaftes Andrücksystem ergibt sich, wenn wenigstens ein Andrückelement einen Greifer, vorzugsweise zum Greifen eines Bauteils, beispielsweise eines Einzelelements, aufweist. Dies ermöglicht es beispielsweise, Speicherzellen nacheinander an der Grundplatte anzuordnen, während andere Speicherzellen mit der Grundplatte an der jeweiligen Fügestelle verfügt werden.

Denkbar ist auch eine Verwendung des Andrücksystems gemäß Patentanspruch 5. Beispielsweise kann dazu das Andrückelement ringförmig oder zylindrisch ausgebildet sein. Dies ermöglicht es beispielsweise, den Fügelaserstrahl durch das Andrückelement hindurchtreten zu lassen und somit durch das Andrückelement hindurch die Fügeteile miteinander zu verfügen.

Die Erfindung betrifft des Weiteren ein Laserfügesystem gemäß Patentanspruch 6.

Dies ermöglicht es, einen Stromspeicher besonders kostengünstig aus seinen Einzelbestandteilen herzustellen. Das Laserfügesystem ist zudem in der Lage, mit nur geringstem Einrichtungsaufwand unterschiedliche Typen von Stromspeichern zu fertigen.

Denkbar ist eine Verwendung des Laserfügesystems gemäß Patentanspruch 7.

Ist der Strahlbereich des Fügelasers kleiner als der Arbeitsbereich des Laserfügesystems, so kann mittels eines verfahrbaren Strahlpositioniersystems der Fügelaser innerhalb des Arbeitsbereichs verfahren und der Strahlbereich innerhalb des Arbeitsbereichs verlagert werden. Ein Scanner zur Steuerung des Fügelaserstrahls ermöglicht zudem eine sehr schnelle Auslenkung des Fügelaserstrahls. Zudem ermöglicht ein Scanner einen weiten Strahlbereich.

Denkbar ist eine Verwendung des Laserfügesystems gemäß Patentanspruch 8. Durch eine Fokuslageverstelleinrichtung kann die Fokuslage verstellt werden. Somit ergibt sich eine zusätzliche Einstellmöglichkeit, mit der der Fügeprozess optimiert werden kann.

Des Weiteren fällt in den Bereich der Erfindung auch ein Verfahren zum Fügen einer Grundplatte und einer Speicherzelle im Bereich einer Fügestelle zur Herstellung eines Stromspeichers gemäß Patentanspruch 9.

Das Andrückelement und die Aufnahme werden also so zueinander positioniert, dass sich das Andrückelement in einem Bereich der auf oder in der Aufnahme angeordneten Grundplatte und der Speicherzelle befindet, in dem diese gefügt werden sollen.

Dieses Verfahren ermöglicht es, im Bereich der Fügestelle eine Grundplatte und eine Speicherzelle lokal aneinanderzudrücken und an der Fügestelle miteinander zu fügen. Da die Grundplatte und die Speicherzelle lediglich lokal aneinandergedrückt werden, ergibt sich ein besonders einfacher und kostengünstiger Fügevorgang.

Dabei ist unter "lokales Aneinanderdrücken" zu verstehen, dass lediglich im Bereich der Fügestelle die Grundplatte und die Speicherzelle aneinandergedrückt werden, insbesondere mittels eines Positioniersystems, vorzugsweise einer Schräg-Positioniereinrichtung und eines Andrückelements.

Werden insbesondere mehrere gleichartige Fügeteile, beispielsweise Speicherzellen, an ein anderes Fügeteil, beispielsweise eine Grundplatte, gedrückt, so ist unter "lokales Aneinanderdrücken" insbesondere zu verstehen, dass nicht alle Fügeteile an das andere Fügeteil gleichzeitig gedrückt werden. In Bezug auf die Herstellung eines Stromspeichers bedeutet dies, dass nicht alle bzw. eine überwiegende Anzahl von Speicherzellen gleichzeitig an die Grundplatte gedrückt werden.

Ein erfindungsgemäßes Verfahren ergibt sich, wenn ein zweites Andrückelement und die Aufnahme zu einer zweiten, nachfolgend zu bearbeitenden Fügestelle relativ positioniert werden, während
- ein erstes Andrückelement und die Aufnahme zu einer ersten Fügestelle relativ positioniert werden, und/oder
- eine Grundplatte und eine Speicherzelle an der ersten Fügestelle lokal aneinandergedrückt werden, und/oder
- eine Grundplatte und eine Speicherzelle an der ersten Fügestelle gefügt werden.

Mit anderen Worten kann während an der ersten Fügestelle eine Bearbeitung durch das erste Andrückelement stattfindet bzw. vorbereitet wird, bereits die Bearbeitung der zweiten Fügestelle vorbereitet werden.

Dabei ist vorgesehen, das zweite Andrückelement in den Bereich der zweiten Fügestelle zu verbringen, sodass dort anschließend eine Grundplatte und eine Speicherzelle aneinandergedrückt und gefügt werden können. Somit können erhebliche Zeiteinsparungen realisiert werden.

Dabei kann insbesondere vorgesehen sein, dass ein Strahlbereich eines Fügelaserstrahls des Fügelasers sprungweise parallel zur Ebene des Andrücksystems relativ zu der ersten Fügestelle verlagert wird. Oftmals ist der Strahlbereich des Fügelaserstrahls kleiner als der Arbeitsbereich des Laserfügesystems insgesamt. Innerhalb des Strahlbereichs kann der Fokus des Fügelaserstrahls mit sehr hoher Geschwindigkeit parallel zur Ebene verlagert werden. Beispielsweise kann diese Verlagerung durch einen in der Regel sehr schnell arbeitenden Scanner erreicht werden.

Beispielsweise kann ein Fügen an der ersten Fügestelle erfolgen. Liegt nun die zweite Fügestelle ebenfalls innerhalb des Strahlbereichs, so kann nach Abschluss des Fügeprozesses an der ersten Fügestelle der Laserstrahl mit sehr hoher Geschwindigkeit zur zweiten Fügestelle zum Fügen der dortigen Grundplatte und Speicherzelle verlagert werden. Somit können beispielsweise innerhalb eines Strahlbereichs gelegene Fügestellen nacheinander sehr schnell bearbeitet werden, ohne dass der Strahlbereich verlagert werden braucht. Lediglich ein "Abschreiten" der einzelnen Fügestellen durch ein Andrückelement bzw. ein wechselseitiges "Abschreiten" mehrerer Andrückelemente mittels der entsprechenden Parallel-Positioniereinrichtungen ist erforderlich.

Ist ein Strahlbereich abgearbeitet, kann sprungweise der Strahlbereich verlagert werden, um im neuen Strahlbereich gelegene Fügestellen ebenfalls mit hoher Geschwindigkeit bearbeiten zu können.

Auch kann vorgesehen sein, dass der Strahlbereich zumindest zeitweise kontinuierlich parallel zur Ebene relativ zu der ersten Fügestelle verlagert wird. Beispielsweise kann vorgesehen sein, die Aufnahme relativ zum Laserfügesystem zu verlagern. Ist beispielsweise die Aufnahme als Förderband ausgebildet, so kann das Förderband kontinuierlich (langsam) bewegt werden. Innerhalb des Strahlbereichs kann diese Relativbewegung beispielsweise ausgeglichen werden durch entsprechendes Gegensteuern des Fügelaserstrahls mittels des Scanners und/oder des Andrückelements. Somit können auch beispielsweise besonders große Fügeteile, beispielsweise besonders große Grundplatten eines Stromspeichers, verarbeitet werden.

Wenigstens ein Prozessparameter, insbesondere Andruckkraft und/oder Position entlang der Andruckrichtung und/oder Geometrie wenigstens einer Grundplatte und/oder einer Speicherzelle, kann mittels eines an einem Andrückelement angeordneten Sensor und/oder mittels des Andrückelements selbst erfasst werden. Insbesondere kann mittels des Prozessparameters der Fügeprozess überwacht und/oder freigegeben bzw. gesperrt werden.

Beispielsweise kann das Andrückelement als Tastsensor verwendet werden. Damit kann beispielsweise eine Position einer Grundplatte und/oder ihre äußere Geometrie im Bereich der Fügestelle erfasst werden. Somit kann beispielsweise auf eine Streifenbildverarbeitungseinheit verzichtet werden. Weist das Andrückelement einen Kraftsensor auf, so kann anhand der Reactio der Andruckkraft beispielsweise überwacht werden, ob die Grundplatte und die Speicherzelle spaltfrei aneinandergedrückt sind, oder ob die Andruckkraft weiter zu erhöhen ist, bevor der Fügeprozess freigegeben bzw. gestartet werden kann.

Auch kann die Fokuslage des Fügelaserstrahls in Abhängigkeit des Prozessparameters gesteuert werden. Beispielsweise kann als Prozessparameter die Oberflächenposition der Fügestelle anhand der Position des Andrückpunkts des Andrückelements ermittelt werden. Dann kann beispielsweise zum Einstich des Fügelasers die Fokuslage auf diese Position abgestimmt werden.

Besonders vorteilhaft ist, wenn die Fokuslage schräg, insbesondere quer, zur Ebene verlagert wird, während der Fügelaserstrahl relativ zur ersten Fügestelle parallel zur Ebene verlagert wird. Dem liegt der Gedanke zugrunde, dass oftmals auch die Fokuslage nur mit vergleichsweise geringer Geschwindigkeit verlagert werden kann. Insbesondere kann oftmals die Eindringtiefe des Fügelaserstrahls in die Grundplatte oder die Speicherzelle, mit anderen Worten: die "Höhenlage", nur langsam verändert werden. Es hat sich jedoch gezeigt, dass üblicherweise ein Laserfügen auch trotz grober Einstellung der Fokuslage qualitativ hochwertig ausführbar ist.

Somit kann der Fügelaserstrahl an der ersten Fügestelle "eintauchen", die dortigen Grundplatte und Speicherzelle aneinanderfügen, und dann während des "Auftauchens" aus der Grundplatte oder der Speicherzelle heraus schon zur nächsten Fügestelle weitergelenkt werden, um dort ohne Zeitverlust wieder entsprechend in eine Grundplatte oder eine Speicherzelle "einzutauchen".

Weitere Merkmale und Vorteile der Erfindung ergeben sich aus der nachfolgenden detaillierten Beschreibung von Varianten des erfindungsgemäßen Verfahrens sowie von Ausführungsbeispielen eines zur Ausführung des Verfahrens geeigneten Laserfügesystems anhand der Figuren der Zeichnung, die erfindungswesentliche Einzelheiten zeigen, sowie aus den Ansprüchen. Die einzelnen Merkmale können je einzeln für sich oder zu mehreren in beliebigen Kombinationen bei Varianten der Erfindung verwirklicht sein.

In der schematischen Zeichnung sind Ausführungsbeispiele und Varianten der Erfindung dargestellt, welche in der nachfolgenden Beschreibung näher erläutert werden.

Es zeigen:
- Fig. 1: eine schematische Darstellung des Laserfügesystems in Draufsicht;
- Fig. 2: das erfindungsgemäße Verfahren.

Beispielhaft soll anhand der Herstellung eines Stromspeichers der Aufbau und die Funktionsweise eines Laserfügesystems und des erfindungsgemäßen Verfahrens näher erläutert werden.

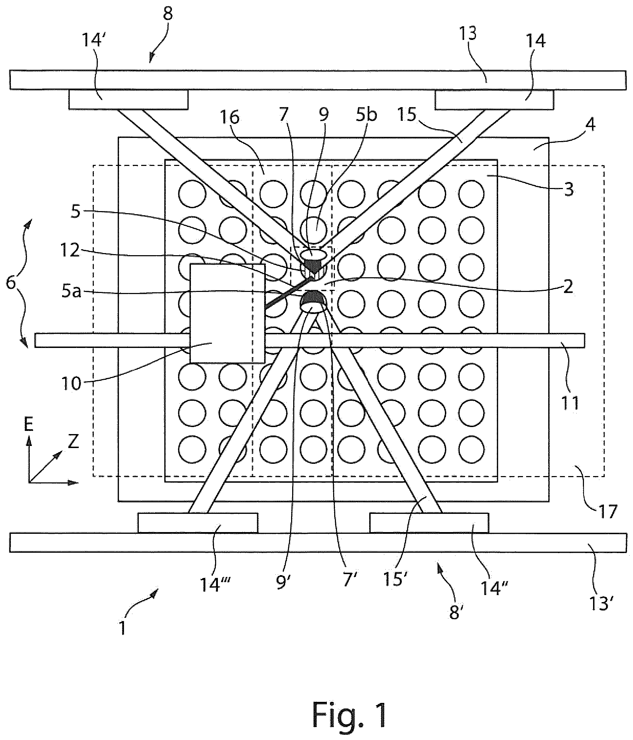

Dazu zeigt die Fig. 1 ein Laserfügesystem 1 mit einer Speicherzelle 2, die an eine Grundplatte 3 lasergefügt, insbesondere lasergeschweißt, werden soll.

Das Laserfügesystem 1 weist eine Aufnahme 4 auf. In der Aufnahme 4 ist die Grundplatte 3 und darunter (in der Draufsicht der Fig. 1 nicht sichtbar und daher nur gestrichelt dargestellt) die Speicherzelle 2 an einer ersten Fügestelle 5 angeordnet. Es versteht sich, dass unter der Grundplatte 3 eine Vielzahl von Speicherzellen an einer Vielzahl von Fügestellen zur Erzielung einer hohen Speicherkapazität des Stromspeichers angeordnet sind und mit der Grundplatte 3 verfügt werden sollen. Insbesondere sind eine zweite Fügestelle 5a und eine dritte Fügestelle 5b exemplarisch dargestellt.

Das Laserfügesystem 1 weist ein Andrücksystem 6 auf. Das Andrücksystem 6 weist zwei Andrückelemente 7, 7' auf. Jedes der Andrückelemente 7, 7' wird durch eine Parallel-Positioniereinrichtung 8, 8' sowie eine Schräg-Positioniereinrichtung 9, 9' geführt.

Zudem ist zu erkennen, dass ein Fügelaser 10 entlang einer Laserlaufschiene 11 innerhalb des Laserfügesystems 1 verlagerbar ist.

In einer alternativen Ausführung ist der Fügelaser 10 mittels einer wenigstens zweidimensionalen Positioniereinrichtung sowohl in einer Längs- als auch einer Querrichtung verlagerbar, um somit einen noch weiteren Verlagerungsbereich zu ermöglichen.

Der Fügelaser 10 erzeugt einen Fügelaserstrahl 12, der im in Fig. 1 abgebildeten Zustand auf die erste Fügestelle 5 gerichtet ist.

Die Parallel-Positioniereinrichtungen 8, 8' dienen zur relativen Positionierung der Aufnahme 4 und der Andrückelemente 7 bzw. 7' parallel zur entlang der Grundplatte 3 verlaufenden Ebene E.

Senkrecht zur durch die Grundplatte 3 aufgespannten Ebene E ist in der Fig. 1 eine z-Richtung markiert.

Die Schräg-Positioniereinrichtungen 9 bzw. 9' sind eingerichtet zur Relativpositionierung der Andrückelemente 7 bzw. 7' und der Aufnahme 4 schräg, insbesondere quer, zur Ebene E, d. h. entlang der z-Richtung. Des Weiteren dienen die Schräg-Positioniereinrichtungen 9, 9' zum Aneinanderdrücken der Fügeteile, insbesondere der Grundplatte 3 und der Speicherzelle 2, während des Fügeprozesses.

Jede der Parallel-Positioniereinrichtungen 8, 8' weist Laufschienen 13, 13' auf. An den Laufschienen 13, 13' sind Linearantriebe 14, 14', 14", 14‴ verschieblich angeordnet. Die Laufschienen 13, 13' bilden zusammen mit den Linearantrieben 14, 14', 14", 14‴ Linearmotoren, durch die Scherenmechaniken 15, 15' gesteuert werden.

Die Laufschienen 13, 13' sind beidseits der Aufnahme 4 angeordnet. Dadurch ist es möglich, die Andrückelemente 7, 7' so weit zur Seite zu verlagern, dass der Bereich der Aufnahme ungehindert von oben zugänglich ist, so dass die Fügeteile z.B. mit einem Greifer auf der Aufnahme 4 positioniert oder entnommen werden können.

An den Gelenkstellen der Scherenmechaniken 15, 15' sind die Schräg-Positioniereinrichtungen 9, 9' angeordnet. Die Schräg-Positioniereinrichtungen 9, 9' sind jeweils als Pneumatikzylinder ausgebildet. Mittels der Pneumatikzylinder können die Andrückelemente 7, 7' entlang der z-Richtung verlagert werden. Insbesondere können damit die Andrückelemente 7, 7' gegen die Grundplatte 3 gepresst werden.

Somit können die Grundplatte 3 und die Speicherzelle 2 im in der Fig. 1 dargestellten Zustand des Laserfügesystems 1 an der ersten Fügestelle 5 mittels des Andrückelements 7 lokal aneinandergedrückt werden, indem der Pneumatikzylinder betätigt wird.

Durch einen Positionssensor der Schräg-Positioniereinrichtung 9 bzw. 9' kann jeweils die Position des Andrückelements 7 bzw. 7' bestimmt werden.

Des Weiteren weist der Fügelaser 10 einen Scanner zur Steuerung des Fügelaserstrahls 12 auf. Der Scanner dient dabei zur schnellen Ablenkung des Fügelaserstrahls 12 innerhalb des Strahlbereichs 16. Wird somit der Fügelaser 10 entlang seiner Laserlaufschiene 11 verlagert, wird auch der Strahlbereich 16 verlagert. Somit kann der Strahlbereich 16 den Arbeitsbereich 17 des Laserfügesystems 1 überstreichen.

Des Weiteren weist der Fügelaser 10 eine Fokuslageverstelleinrichtung auf. Die Fokuslageverstelleinrichtung dient zur Verstellung der Fokuslage des Fügelaserstrahls 12.

Des Weiteren weisen die Andrückelemente 7, 7' auch Temperierelemente auf. Die Temperierelemente sind insbesondere als Kühlelemente ausgebildet. Sie dienen dazu, während des Laserfügens den umliegenden Bereich um eine Fügestelle 5, 5a, 5b herum mittels der Andrückelemente 7, 7' zu kühlen.

Der Kontaktbereich bzw. Andruckpunkt der Andrückelemente 7, 7' ist ringförmig ausgebildet, sodass sich ein Durchtrittsbereich ergibt, durch den der Fügelaserstrahl 12 hindurchtreten kann.

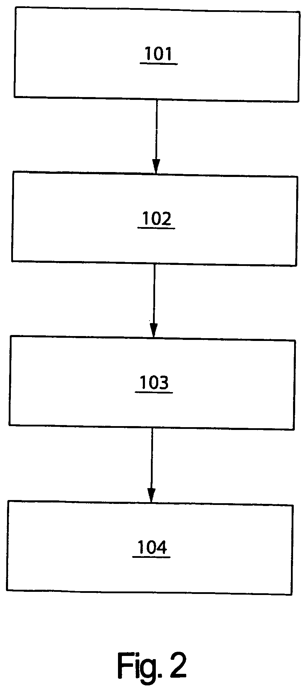

Die Fig. 2 zeigt schematisch das erfindungsgemäße Verfahren zum Fügen von Fügeteilen.

Anhand der Fig. 2 und anhand des Fallbeispiels des Fügens der Grundplatte 3 mit der Speicherzelle 2 bzw. einer Vielzahl von gleichartigen Speicherzellen 2 wird im Folgenden das Verfahren anhand des Laserfügesystems 1 näher erläutert.

In einem ersten Schritt 101 werden die Fügeteile in der Aufnahme 4 des Andrücksystems 6 des Laserfügesystems 1 aufgenommen. Dazu werden zunächst die Speicherzellen 2 innerhalb der Aufnahme 4 matrixförmig nebeneinander aufgestellt. Anschließend wird die Grundplatte 3 auf die Speicherzellen 2 aufgelegt und mittels einer Haltevorrichtung der Aufnahme 4 in der Aufnahme 4 gehalten.

In einem zweiten Verfahrensschritt 102 erfolgt eine relative Positionierung des Andrückelements 7 und der Aufnahme 4 zur ersten Fügestelle 5 mittels der Parallel-Positoniereinrichtung 8. Dies erfolgt insbesondere durch Verlagern der Linearantriebe 14, 14', durch die die Scherenmechanik 15 und damit die Schräg-Positioniereinrichtung 9 und das Andrückelement 7 innerhalb des Arbeitsbereichs 17 verlagert werden.

Der in der Fig. 1 dargestellte Zustand entspricht dem Endzustand dieses Verfahrensschritts. Zu erkennen ist, dass das Andrückelement 7 in z-Richtung oberhalb der ersten Fügestelle 5 positioniert ist.

In einem nachfolgenden Verfahrensschritt 103 werden nun die Fügeteile, d. h. die Grundplatte 3 und die Speicherzelle 2, die im Bereich der ersten Fügestelle 5, angeordnet sind, lokal aneinandergedrückt. Dazu wird die Schräg-Positioniereinrichtung 9 betätigt und das Andrückelement 7 in z-Richtung auf die Grundplatte 3 hinbewegt, bis sie die Grundplatte 3 gegen die Speicherzelle 2 andrückt. Je nach Toleranz bzw. Dimension der Speicherzelle 2 muss das Andrückelement 7 mehr oder weniger in z-Richtung bewegt werden. Die Endlage des Andrückelements 7 und damit die Position der ersten Fügestelle 5 unter Andruck werden durch den Positionssensor des Andrückelements 7 erfasst.

Mittels der Positionssensor-Information wird dabei die Bewegung überwacht und gegebenenfalls nachjustiert.

In dem nachfolgenden Verfahrensschritt 104 wird nun mittels des Fügelaserstrahls 12 die Speicherzelle 2 mit der Grundplatte 3 an der ersten Fügestelle verfügt. Zur Verbesserung des Fügeergebnisses wird dabei die Fokuslage des Fügelaserstrahls 12 auf die erfasste Position abgestimmt.

Das zweite Andrückelement 7' befindet sich bereits im Bereich der zweiten Fügestelle 5a.

Verfahrensgemäß wird während der verbleibenden Zeit, während an der ersten Fügestelle 5 verfügt wird, an der zweiten Fügestelle 5a das Andrückelement 7' in z-Richtung abgesenkt, um auch hier die Grundplatte 3 lokal gegen die darunter befindliche Speicherzelle aneinanderzudrücken. Somit kann der Fügelaserstrahl 12 unmittelbar nach Beendigung des Fügens an der ersten Fügestelle 5 auf die zweite Fügestelle 5a gelenkt werden, um dort die beiden Fügeteile aneinanderzufügen.

Sobald mittels des Fügelaserstrahls 12 an der zweiten Fügestelle 5a gefügt wird, wird das erste Andrückelement 7 wieder entgegen der z-Richtung angehoben und mittels der Parallel-Positioniereinrichtung 8 zur dritten Fügestelle 5b bewegt. Somit wird nun die Zeitdauer des Fügens an der zweiten Fügestelle 5a genutzt, um das erste Andrückelement 7 zur dritten Fügestelle 5b zu bewegen.

Somit werden die Fügeteile an den Fügestellen innerhalb des Strahlbereichs 16 nacheinander gefügt, indem mittels der Andrückelemente 7, 7' die Fügestellen jeweils nacheinander angefahren und an diesen die jeweiligen Fügeteile lediglich lokal aneinandergedrückt werden.

Dabei kann ein vordefiniertes Muster bzw. eine vordefinierte Sequenz der Fügestellen abgefahren werden. Insbesondere ist in dieser Variante des Verfahrens vorgesehen, die Fügestellen zeilenweise, d. h. quer zur Laserlaufschiene 11, anzufahren. In einer weiteren Variante ist es vorgesehen, die Fügestellen spaltenweise oder entlang einer wellenförmigen Linie anzufahren.

Sobald alle Fügestellen innerhalb des Strahlbereichs 16 fertig bearbeitet sind, wird der Fügelaser 10 entlang der Laserlaufschiene 11 und damit der Strahlbereich 16 verlagert, um die Bearbeitung an weiteren, bislang unbearbeiteten, Fügestellen zu ermöglichen.

In einer alternativen Verfahrensvariante umfassen die Bearbeitungen auch weitere Bearbeitungsmethoden, beispielsweise andere laserbasierte Prozesse wie Markieren oder Schneiden durch den (Füge-)Laser, auch außerhalb von Fügestellen, sowie beispielsweise auch mechanische Bearbeitungen, insbesondere Verformungen, durch Andrückelemente, insbesondere in den Zeitphasen, in denen diese sich nicht im Bereich der aktuellen Fügestelle befinden.

In einer weiteren Variante des Verfahrens ist die Aufnahme 4 als Förderband ausgebildet. Das Förderband und damit die Fügeelemente 2, 3 werden in dieser Variante kontinuierlich parallel zur Ebene E verlagert. Diese Verlagerung wird mittels des Scanners des Fügelasers 10 so kompensiert, dass der Fügelaser 10 jeweils relativ zur jeweiligen Fügestelle während des Fügeprozesses ruht. Die Geschwindigkeit der Bewegung der Aufnahme 4 ist bei dieser Variante so gewählt, dass zumindest alle Fügestellen in Querrichtung zum Fügelaser 10 bearbeitet werden können.

Somit ergibt sich ein Verfahren zum Fügen von Fügeteilen im Bereich einer Fügestelle mittels des erfindungsgemäßen Laserfügesystems, mit dem mit minimalem Zeitverlust und somit besonders kostengünstig und effizient Fügeteile aneinandergefügt, insbesondere ein Stromspeicher aus einer Vielzahl von Speicherzellen und einer Grundplatte gefertigt werden können.

### Bezugszeichenliste:

- 1: Laserfügesystem
- 2: Speicherzelle
- 3: Grundplatte
- 4: Aufnahme
- 5: erste Fügestelle
- 5a: zweite Fügestelle
- 5b: dritte Fügestelle
- 6: Andrücksystem
- 7, 7': Andrückelement
- 8, 8': Parallel-Positioniereinrichtung
- 9, 9': Schräg-Positioniereinrichtung
- 10: Fügelaser
- 11: Laserlaufschiene
- 12: Fügelaserstrahl
- 13,13': Laufschiene
- 13a, 13a', 13a", 13aʺʺ: Linearantrieb
- 15, 15': Scherenmechanik
- 16: Strahlbereich
- 17: Arbeitsbereich

## Patentansprüche

1. Andrücksystem (6) für ein Laserfügesystem (1) zum Aneinanderdrücken einer Grundplatte (3) und einer Speicherzelle (2) im Bereich einer Fügestelle (5, 5a, 5b) zur Herstellung eines Stromspeichers, mit
- einer Aufnahme (4) zur Aufnahme der Grundplatte (3) und der Speicherzelle (2),
- einem Andrückelement (7, 7') zum lokalen Aneinanderdrücken der Grundplatte (3) und der Speicherzelle (2) im Bereich der Fügestelle (5, 5a, 5b),
- einem Positioniersystem zur Relativpositionierung des Andrückelements (7, 7') und der Aufnahme (4) und zum Aneinanderdrücken der Grundplatte (3) und der Speicherzelle (2) während des Fügeprozesses, umfassend
. eine Parallel-Positioniereinrichtung (8, 8') zur Relativpositionierung der Aufnahme (4) und des Andrückelements (7, 7') parallel zu einer Ebene (E) und
. eine Schräg-Positioniereinrichtung (9, 9') zur Relativpositionierung des Andrückelements (7, 7') und der Aufnahme (4) schräg, insbesondere quer, zur Ebene (E) und zum Aneinanderdrücken der Grundplatte (3) und der Speicherzelle (2) während des Fügeprozesses, wobei
- das Andrücksystem (6) wenigstens zwei Andrückelemente (7, 7') und wenigstens zwei Schräg-Positioniereinrichtungen (9, 9') aufweist, **dadurch gekennzeichnet, dass** das Andrücksystem (6) wenigstens zwei Parallel-Positioniereinrichtungen (8, 8') aufweist und das Andrücksystem (6) eingerichtet ist, mit einem ersten Andrückelement (7, 7') an einer ersten Fügestelle (5, 5a, 5b) die Grundplattte (3) und die Speicherzelle (2) aneinanderzudrücken, während ein zweites Andrückelement (7, 7') zu einer zweiten Fügestelle (5, 5a, 5b) verlagert wird, sodass dort anschließend Fügeteile aneinandergedrückt und gefügt werden können.

2. Andrücksystem nach Anspruch 1, wobei wenigstens eine Parallel-Positioniereinrichtung (8, 8') eine Scherenmechanik (15, 15') und/oder einen Linearantrieb (13a, 13a', 13a", 13aʺʺ) aufweist.

3. Andrücksystem nach einem der vorhergehenden Ansprüche, wobei wenigstens ein Andrückelement (7, 7') einen Sensor, insbesondere einen Positionssensor zur Lokalisation einer Fügestelle (5, 5a, 5b), einen Temperatursensor und/oder einen Kraftsensor zur Messung der Andrückkraft, aufweist.

4. Andrücksystem nach einem der vorhergehenden Ansprüche, wobei wenigstens ein Andrückelement (7, 7') ein Temperierelement, vorzugsweise zum Temperieren wenigstens eines Bereichs der Fügestelle (5, 5a, 5b), aufweist.

5. Andrücksystem nach einem der vorhergehenden Ansprüche, wobei wenigstens ein Andrückelement (7, 7') einen Durchtrittsbereich zum Durchtritt eines Fügelaserstrahls aufweist.

6. Laserfügesystems (1) zum Fügen einer Grundplatte (3) und einer Speicherzelle (2) im Bereich einer Fügestelle (5, 5a, 5b) zur Herstellung eines Stromspeichers, wobei das Laserfügesystem (1)
- einen Fügelaserstrahl (12) erzeugenden Fügelaser (10) und
- ein Andrücksystem (6) gemäß einem der vorhergehenden Ansprüche
umfasst.

7. Laserfügesystems nach Anspruch 6, wobei ein Strahlpositioniersystem des Fügelasers (10), insbesondere parallel zur Ebene (E), verfahrbar ist und/oder einen Scanner zur Steuerung des Fügelaserstrahls (12), insbesondere parallel zur Ebene (E), umfasst.

8. Laserfügesystems nach einem der Ansprüche 6 oder 7, wobei das Laserfügesystem (1) eine Fokuslageverstelleinrichtung zur Verstellung der Fokuslage des Fügelaserstrahls (12) aufweist.

9. Verfahren zum Fügen einer Grundplatte (3) und einer Speicherzelle (2) im Bereich einer Fügestelle (5, 5a, 5b) zur Herstellung eines Stromspeichers unter Verwendung eines Laserfügesystems (1) gemäß einem der Ansprüche 6 bis 8
umfassend die Schritte:
a) Aufnahme der Grundplatte (3) und der Speicherzelle (2) in oder auf der Aufnahme (4) des Andrücksystems (6) des Laserfügesystems (1);
b) relative Positionierung des Andrückelements (7, 7') des Andrücksystems (6) und der Aufnahme zur Fügestelle (5, 5a, 5b) mittels der Parallel-Positioniereinrichtung (8, 8') des Andrücksystems (6);
c) lokales Aneinanderdrücken der Grundplatte (3) und der Speicherzelle (2) im Bereich der Fügestelle (5, 5a, 5b) mittels des Schräg-Positioniereinrichtung (9, 9') und des Andrückelements (7, 7');
d) Fügen der Grundplatte (3) und der Speicherzelle (2) an der Fügestelle (5, 5a, 5b) mittels des Fügelasers (12) des Laserfügesystems (1),
e) relative Positionierung eines zweiten Andrückelements (7, 7') und der Aufnahme (4) zu einer zweiten, nachfolgend zu bearbeitenden Fügestelle (5, 5a, 5b) während
• ein erstes Andrückelement (7, 7') und die Aufnahme (4) zu einer ersten Fügestelle (5, 5a, 5b) relativ positioniert werden, und/oder
• eine Grundplatte (3) und eine Speicherzelle (2) an der ersten Fügestelle (5, 5a, 5b) lokal aneinandergedrückt werden, und/oder
• eine Grundplatte (3) und eine Speicherzelle (2) an der ersten Fügestelle (5, 5a, 5b) gefügt werden.

10. Verfahren nach Anspruch 9, **dadurch gekennzeichnet, dass** ein Strahlbereich (16) eines Fügelaserstrahls (12) des Fügelasers (10) sprungweise
parallel zur Ebene (E) des Andrücksystems (6) relativ zu der ersten Fügestelle (5, 5a, 5b) verlagert wird.

11. Verfahren nach einem der Ansprüche 9 oder 10, **dadurch gekennzeichnet, dass** der Strahlbereich (16) zumindest zeitweise kontinuierlich parallel zur Ebene (E) relativ zu der ersten Fügestelle (5, 5a, 5b) verlagert wird.

12. Verfahren nach einem der Ansprüche 9 bis 11, **dadurch gekennzeichnet, dass** wenigstens ein Prozessparameter, insbesondere Andruckkraft und/oder Position entlang der Andruckrichtung (z) und/oder Geometrie wenigstens einer Grundplatte (3) und/oder einer Speicherzelle (2), mittels eines an einem Andrückelement (7, 7') angeordneten Sensors und/oder mittels des Andrückelements (7, 7') selbst erfasst wird.

13. Verfahren nach einem der Ansprüche 9 bis 12, **dadurch gekennzeichnet, dass** die Fokuslage schräg, insbesondere quer, zur Ebene (E) verlagert wird, während der Fügelaserstrahl (12) relativ zur ersten Fügestelle (5, 5a, 5b) parallel zur Ebene (E) verlagert wird.

## Claims

1. Pressing system (6) for a laser joining system (1) for pressing a base plate (3) and a storage cell (2) together in the region of a joining point (5, 5a, 5b) in order to produce a power storage means, comprising
- a receptacle (4) for accomodating the base plate (3) and the storage cell (2),
- a pressing element (7, 7') for locally pressing the base plate (3) and the storage cell (2) together in the region of the joining point (5, 5a, 5b),
- a positioning system for the relative positioning of the pressing element (7, 7') and the receptacle (4) and for pressing the base plate (3) and the storage cell (2) together during the joining process, having
• a parallel positioning device (8, 8') for the relative positioning of the receptacle (4) and the pressing element (7, 7') in parallel with a plane (E) and
• an oblique positioning device (9, 9') for the relative positioning of the pressing element (7, 7') and the receptacle (4) obliquely, in particular transversely, to the plane (E) and for pressing the base plate (3) and the storage cell (2) together during the joining process,
- the pressing system (6) having at least two pressing elements (7, 7') and at least two oblique positioning devices (9, 9'), **characterized in that** the pressing system (6) has at least two parallel positioning devices (8, 8') and the pressing system (6) is configured to press the base plate (3) and the storage cell (2) together at a first joining point (5, 5a, 5b) using a first pressing element (7, 7'), while a second pressing element (7, 7') is displaced to a second joining point (5, 5a, 5b) so that parts to be joined can then be pressed together and joined there.

2. Pressing system according to claim 1, wherein at least one parallel positioning device (8, 8') has a scissor mechanism (15, 15') and/or a linear drive (13a, 13a', 13a", 13aʺʺ).

3. Pressing system according to either of the preceding claims, wherein at least one pressing element (7, 7') has a sensor, in particular a position sensor for locating a joining point (5, 5a, 5b), a temperature sensor and/or a force sensor for measuring the pressing force.

4. Pressing system according to any of the preceding claims, wherein at least one pressing element (7, 7') has a temperature-control element, preferably for controlling the temperature of at least one region of the joining point (5, 5a, 5b).

5. Pressing system according to any of the preceding claims, wherein at least one pressing element (7, 7') has a passage region for the passage of a joining laser beam.

6. Laser joining system (1) for joining a base plate (3) and a storage cell (2) in the region of a joining point (5, 5a, 5b) in order to produce a power storage means, wherein the laser joining system (1) comprises
- a joining laser (10) generating a joining laser beam (12) and
- a pressing system (6) according to any of the preceding claims.

7. Laser joining system according to claim 6, wherein a beam positioning system of the joining laser (10) is movable, in particular in parallel with the plane (E), and/or comprises a scanner for controlling the joining laser beam (12), in particular in parallel with the plane (E).

8. Laser joining system according to one of claims 6 or 7, wherein the laser joining system (1) has a focus position adjustment device for adjusting the focus position of the joining laser beam (12).

9. Method for joining a base plate (3) and a storage cell (2) in the region of a joining point (5, 5a, 5b) in order to produce a power storage means using a laser joining system (1) according to any of claims 6 to 8,
comprising the steps of:
a) accommodating the base plate (3) and the storage cell (2) in or on the receptacle (4) of the pressing system (6) of the laser joining system (1);
b) relative positioning of the pressing element (7, 7') of the pressing system (6) and the receptacle with respect to the joining point (5, 5a, 5b) by means of the parallel positioning device (8, 8') of the pressing system (6);
c) locally pressing the base plate (3) and the storage cell (2) together in the region of the joining point (5, 5a, 5b) by means of the oblique positioning device (9, 9') and the pressing element (7, 7');
d) joining the base plate (3) and the storage cell (2) at the joining point (5, 5a, 5b) by means of the joining laser (12) of the laser joining system (1),
e) relative positioning of a second pressing element (7, 7') and the receptacle (4) to a second joining point (5, 5a, 5b) to be subsequently processed, while
• a first pressing element (7, 7') and the receptacle (4) are positioned to a first joining point (5, 5a, 5b), and/or
• a base plate (3) and a storage cell (2) are locally pressed together at the first joining point (5, 5a, 5b), and/or
• a base plate (3) and a storage cell (2) are joined at the first joining point (5, 5a, 5b).

10. Method according to claim 9, **characterized in that** a beam region (16) of a joining laser beam (12) of the joining laser (10) is displaced in a stepwise manner in parallel with the plane (E) of the pressing system (6) relative to the first joining point (5, 5a, 5b).

11. Method according to one of claims 9 or 10, **characterized in that** the beam region (16) is at least temporarily continuously displaced in parallel with the plane (E) relative to the first joining point (5, 5a, 5b).

12. Method according to any of claims 9 to 11, **characterized in that** at least one process parameter, in particular pressing force and/or position in the pressing direction (z) and/or geometry of at least one base plate (3) and/or a storage cell (2), is detected by means of a sensor arranged on a pressing element (7, 7') and/or by means of the pressing element (7, 7') itself.

13. Method according to any of claims 9 to 12, **characterized in that** the focus position is displaced obliquely, in particular transversely, to the plane (E), while the joining laser beam (12) is displaced in parallel with the plane (E) relative to the first joining point (5, 5a, 5b).

## Revendications

1. Système de pressage (6) pour un système d'assemblage par laser (1) permettant de presser l'une contre l'autre une plaque de base (3) et une cellule d'accumulateur (2) dans la zone d'un point d'assemblage (5, 5a, 5b) pour la fabrication d'un accumulateur de courant, comportant
- un logement (4) permettant de recevoir la plaque de base (3) et la cellule d'accumulateur (2),
- un élément de pressage (7, 7') permettant de presser localement l'une contre l'autre la plaque de base (3) et la cellule d'accumulateur (2) dans la zone du point d'assemblage (5, 5a, 5b),
- un système de positionnement pour le positionnement relatif de l'élément de pressage (7, 7') et du logement (4) et permettant de presser l'une contre l'autre la plaque de base (3) et la cellule d'accumulateur (2) pendant le processus d'assemblage, comprenant
• un dispositif de positionnement parallèle (8, 8') pour le positionnement relatif du logement (4) et de l'élément de pressage (7, 7') parallèlement à un plan (E), et
• un dispositif de positionnement oblique (9, 9') pour le positionnement relatif de l'élément de pressage (7, 7') et du logement (4) obliquement, en particulier transversalement, par rapport au plan (E) et permettant de presser l'une contre l'autre la plaque de base (3) et la cellule d'accumulateur (2) pendant le processus d'assemblage, dans lequel
- le système de pressage (6) présente au moins deux éléments de pressage (7, 7') et au moins deux dispositifs de positionnement oblique (9, 9'), **caractérisé en ce que** le système de pressage (6) présente au moins deux dispositifs de positionnement parallèle (8, 8') et le système de pressage (6) est configuré pour presser l'une contre l'autre la plaque de base (3) et la cellule d'accumulateur (2) avec un premier élément de pressage (7, 7') à un premier point d'assemblage (5, 5a, 5b) tandis qu'un second élément de pressage (7, 7') est déplacé vers un second point d'assemblage (5, 5a, 5b) de sorte que des pièces à assembler peuvent ensuite y être pressées l'une contre l'autre et assemblées.

2. Système de pressage selon la revendication 1, dans lequel au moins un dispositif de positionnement parallèle (8, 8') présente un mécanisme à ciseaux (15, 15') et/ou un entraînement linéaire (13a, 13a', 13a", 13aʺʺ).

3. Système de pressage selon l'une des revendications précédentes, dans lequel au moins un élément de pressage (7, 7') présente un capteur, en particulier un capteur de position permettant de localiser un point d'assemblage (5, 5a, 5b), un capteur de température et/ou un capteur de force permettant de mesurer la force de pressage.

4. Système de pressage selon l'une des revendications précédentes, dans lequel au moins un élément de pressage (7, 7') présente un élément de régulation de température, de préférence permettant de réguler la température d'au moins une zone du point d'assemblage (5, 5a, 5b).

5. Système de pressage selon l'une des revendications précédentes, dans lequel au moins un élément de pressage (7, 7') présente une zone de passage pour le passage d'un faisceau laser d'assemblage.

6. Système d'assemblage par laser (1) permettant d'assembler une plaque de base (3) et une cellule d'accumulateur (2) dans la zone d'un point d'assemblage (5, 5a, 5b) pour la fabrication d'un accumulateur de courant, dans lequel le système d'assemblage par laser (1) comprend
- un laser d'assemblage (10) produisant un faisceau laser d'assemblage (12), et
- un système de pressage (6) selon l'une des revendications précédentes.

7. Système d'assemblage par laser selon la revendication 6, dans lequel un système de positionnement de faisceau du laser d'assemblage (10) peut être déplacé, en particulier parallèlement au plan (E), et/ou comprend un scanneur permettant de commander le faisceau laser d'assemblage (12), en particulier parallèlement au plan (E).

8. Système d'assemblage par laser selon l'une des revendications 6 ou 7, dans lequel le système d'assemblage par laser (1) présente un dispositif de réglage de position focale permettant de régler la position focale du faisceau laser d'assemblage (12).

9. Procédé permettant l'assemblage d'une plaque de base (3) et d'une cellule d'accumulateur (2) dans la zone d'un point d'assemblage (5, 5a, 5b) pour la fabrication d'un accumulateur de courant à l'aide d'un système d'assemblage par laser (1) selon l'une des revendications 6 à 8
comprenant les étapes consistant à :
a) recevoir la plaque de base (3) et la cellule d'accumulateur (2) dans le logement (4) du système de pressage (6) du système d'assemblage par laser (1), ou sur ledit logement, ;
b) effectuer le positionnement relatif de l'élément de pressage (7, 7') du système de pressage (6) et du logement par rapport au point d'assemblage (5, 5a, 5b) au moyen du dispositif de positionnement parallèle (8, 8') du système de pressage (6) ;
c) presser localement l'une contre l'autre la plaque de base (3) et la cellule d'accumulateur (2) dans la zone du point d'assemblage (5, 5a, 5b) au moyen du dispositif de positionnement oblique (9, 9') et de l'élément de pressage (7, 7') ;
d) assembler la plaque de base (3) et la cellule d'accumulateur (2) au niveau du point d'assemblage (5, 5a, 5b) au moyen du laser d'assemblage (12) du système d'assemblage par laser (1),
e) effectuer le positionnement relatif d'un second élément de pressage (7, 7') et du logement (4) vers un second point d'assemblage (5, 5a, 5b) à traiter ultérieurement pendant que
• un premier élément de pressage (7, 7') et le logement (4) sont positionnés relativement à un premier point d'assemblage (5, 5a, 5b), et/ou
• une plaque de base (3) et une cellule d'accumulateur (2) sont pressées localement l'une contre l'autre au niveau du premier point d'assemblage (5, 5a, 5b), et/ou
• une plaque de base (3) et une cellule d'accumulateur (2) sont assemblées au niveau du premier point d'assemblage (5, 5a, 5b).

10. Procédé selon la revendication 9, **caractérisé en ce qu'**une zone de faisceau (16) d'un faisceau laser d'assemblage (12) du laser d'assemblage (10) est déplacée par sauts parallèlement au plan (E) du système de pressage (6) par rapport au premier point d'assemblage (5, 5a, 5b).

11. Procédé selon l'une des revendications 9 ou 10, **caractérisé en ce que** la zone de faisceau (16) est déplacée au moins temporairement en continu parallèlement au plan (E) par rapport au premier point d'assemblage (5, 5a, 5b).

12. Procédé selon l'une des revendications 9 à 11, **caractérisé en ce qu'**au moins un paramètre de processus, en particulier la force de pressage et/ou la position le long de la direction de pressage (z) et/ou la géométrie d'au moins une plaque de base (3) et/ou d'une cellule d'accumulateur (2), sont détectées au moyen d'un capteur disposé sur un élément de pressage (7, 7') et/ou au moyen de l'élément de pressage (7, 7') lui-même.

13. Procédé selon l'une des revendications 9 à 12, **caractérisé en ce que** la position focale est déplacée obliquement, en particulier transversalement, par rapport au plan (E), pendant que le faisceau laser d'assemblage (12) est déplacé parallèlement au plan (E) par rapport au premier point d'assemblage (5, 5a, 5b).
